(19) Europäisches Patentamt

European Patent Office

Office européen des brevets

(11) **EP 0 979 024 A1**

(12) **EUROPÄISCHE PATENTANMELDUNG**

(43) Veröffentlichungstag:
**09.02.2000 Patentblatt 2000/06**

(51) Int. Cl.⁷: **H05B 33/00**, H05B 33/08,
G03G 17/00, G02F 1/136

(21) Anmeldenummer: **99114383.5**

(22) Anmeldetag: **22.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.08.1998 DE 19835392**

(71) Anmelder:
**Mannesmann VDO Aktiengesellschaft
60388 Frankfurt am Main (DE)**

(72) Erfinder:
• **Maisel, Jürgen
  55126 Mainz (DE)**
• **Beckschwarte, Klaus
  64832 Babenhausen (DE)**

(74) Vertreter:
**Rassler, Andrea, Dipl.-Phys.
Kruppstrasse 105
60388 Frankfurt (DE)**

(54) **Ansteuerschaltung für Leuchtdioden**

(57) Bei einer Ansteuerschaltung für eine Mehrzahl von Leuchtdioden, wobei der Strom ($I_{LED}$) durch jede der Leuchtdioden durch jeweils eine Stromquelle einstellbar ist, und wobei mehrere Stromquellen in einem integrierten Schaltkreis zusammengefaßt sind, ist vorgesehen, daß eine Mehrzahl von Stromquellen einen gemeinsamen und Vorwiderstand zur Senkung der Verlustleistung in den einzelnen Stromquellen aufweist.

Fig. 1

**Beschreibung**

Die Erfindung betrifft eine Ansteuerschaltung für Leuchtdioden, mit der die Helligkeit der Leuchtdioden einstellbar ist. Leuchtdioden werden auch zur Darstellung von Informationen verwendet. Hierbei sind entweder bestimmten Informationen bestimmte Leuchtdioden zugeordnet, oder aber die Anzeigen sind in mehrere Segmente oder Matrizen aufgeteilt, die jeweils eine oder mehrere Leuchtdioden enthalten. So können je nach Ein bzw. Ausschalten der Leuchtdioden verschiedene Informationen auf einer Anzeige dargestellt werden.

Zum Ansteuern der Leuchtdioden ist es bekannt, den Strom durch die Leuchtdioden mittels eines Vorwiderstandes einzuprägen, der zwischen die Ansteuerspannung und die Leuchtdioden geschaltet ist. Durch unterschiedliche Vorwärtsspannungen $U_{LED}$ der einzelnen Leuchtdioden (z. B. $U_{LED}$ = 1,8 V bis 2,5 V für rote Leuchtdioden) sind die Ströme durch die Leuchtdioden dennoch unterschiedlich hoch und dadurch auch die Helligkeit unterschiedlich.

Weiterhin ist es bekannt, die Leuchtdioden mittels einer Stromquelle anzusteuern. So haben Vorwärtsspannungstoleranzen der Leuchtdioden und Spannungsversorgungstoleranzen nur noch geringen Einfluß auf die Helligkeit der Leuchtdioden.

Schließlich ist es bekannt, mehrere Stromquellen in einem integrierten Schaltkreis anzuordnen. Um die Verlustleistung in dem integrierten Schaltkreis auf einem Niveau zu halten, das eine Zerstörung des integrierten Schaltkreises infolge thermischer Überbeanspruchung verhindert, wird bei bekannten Ansteuerschaltungen für jede Stromquelle ein Vorwiderstand verwendet, an dem ein Teil der überflüssigen Spannung abfällt und so eine Überhitzung der integrierten Schaltkreise verhindert.

Nachteilig hier bei ist es, daß eine relativ große Anzahl von Vorwiderständen für die bekannte Ansteuerschaltung benötigt wird.

Aufgabe der Erfindung ist es daher, eine Ansteuerschaltung für Leuchtdioden anzugeben, wobei der Strom durch jede Leuchtdiode durch jeweils eine Stromquelle einstellbar ist und wobei mehrere Stromquellen in einem integrierten Schaltkreis zusammengefaßt sind, der wenige Vorwiderstände benötigt und damit preiswerter ist.

Diese Aufgabe wird dadurch gelöst, daß ein Vorwiderstand für mehrere Leuchtdioden und damit auch Stromquellen verwendet wird. Hierdurch ist es möglich, einen Großteil der nicht benötigten Spannung an den Vorwiderstand zu beseitigen. Da jede Leuchtdiode durch eine separate Stromquelle geregelt wird, ist es für die Lichtstärke der einzelnen eingeschalteten Leuchtdioden unbeachtlich, wieviele der Leuchtdioden, die über jeweils einen Vorwiderstand mit Strom versorgt werden, gerade ein- bzw. ausgeschaltet sind. Durch die Reduzierung der Anzahl der Vorwiderstände wird auch der für die Ansteuerschaltung benötigte Platzbedarf kleiner. Bei einem Nominalstrom durch eine Leuchtdiode von 30 mA, Vorwiderständen mit einer zulässigen Verlustleistung von 250 mW und einer Versorgungsspannung von 5 V für die Ansteuerschaltung sind so drei Leuchtdioden über einen Vorwiderstand versorgbar.

In üblichen integrierten Schaltungen wird die mittlere mögliche Verlustleistung als Wert bei Nenntemperatur (z.B.25° C ) mit einem Derating für höhere Umgebungstemperaturen angegeben. Dieser Wert gilt für das gesamte Gehäuse. Grenzen bilden dabei Gehäusegröße ( Anzahl der Pins und Abmessungen ) und die Gestaltung des sogenannten Frames (Rahmens ). Dies kann dazu führen, daß aus Verlustleistungsgründen eine höhere Integration, d.h. eine höhere Anzahl von Ausgängen ( bei entsprechender Belastung ) nicht genutzt werden können oder eine entsprechende Anzahl von Stromquellen integrierbar sind.

Besonders vorteilhaft ist es, die Lötpads für die Vorwiderstände auf der Leiterplatte so auszugestalten, daß ihre Fläche größer ist, als die Verbindung zwischen dem Lötpad und dem Anschluß des Vorwiderstandes benötigten Fläche. Durch den eintretenden Kühleffekt können die Vorwiderstände dann eine Verlustleistung verkraften, die über ihrer Nennverlustleistung liegt.

Die Erfindung wird nachfolgend anhand der Figuren näher beschrieben. Es zeigen:

Fig.1. Ein Ausführungsbeispiel eines Schaltplans einer erfindungsgemäßen Ansteuerschaltung.

Fig 2. Einen Widerstand mit einer besonders bevorzugten Ausgestaltung der Lötpads auf einer Leiterplatte.

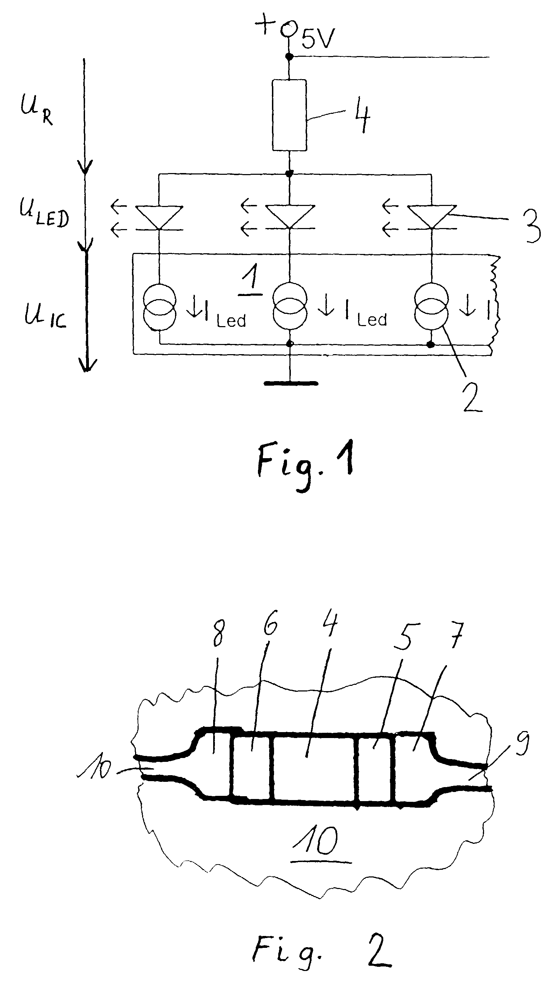

Fig 1 zeigt einen integrierten Schaltkreis 1, in dem 3 Stromquellen 2 dargestellt sind. Jede der Stromquellen 2 ist mit dem Massepotential und jeweils mit einer Leuchtdiode 3 verbunden. Ein Vorwiderstand 4 ist einerseits mit einer Versorgungsapannung + und andererseits mit drei Leuchtdioden 3 verbunden. Der Spannungspfeil $U_R$ bezeichnet die Spannung, die über dem Vorwiderstand 4 abfällt, $U_{LED}$ die Spannung, die über einer Leuchtdiode 2 abfällt und $U_{IC}$ die Spannung, die über dem integrierten Schaltkreis 1 abfällt.

Die folgende Betrachtung geht davon aus, daß jede der Stromquellen 2 einen Konstantstrom $I_{LED}$ von 30 mA einstellt, über einer durchgeschalteten Leuchtdiode 3 eine Spannung $U_{LED}$ von 1,5 V abfällt und der Vorwiderstand 4 einen Wert von 24,4 Ω aufweist. Der Vorwiderstand 4 weist eine maximale Verlustleistung von 250mW und der integrierte Schaltkreis 1 eine Verlustleistung von ebenfalls 250mW bei der höchstzulässigen Betriebstemperatur auf.

Sofern nur eine Stromquelle 2 eingeschaltet ist und demzufolge nur eine Leuchtdiode 3 leuchtet, fließt ein Strom von 30 mA über den Widerstand 4. Somit fällt über dem Widerstand eine Spannung $U_R = 30$ mA x $24{,}4\ \Omega = 0{,}73$ V ab, so daß sich für den Spannungsabfall über den integrierten Schaltkreis $U_{IC} = 5\ V - U_R - U_{LED} = 2{,}71$ V. Somit folgt für die Verlustleistung in dem integrierten Schaltkreis 4: $P_{IC} = U_{IC}$ x $I_{LED} = 83$ mW. Bei zwei leuchtenden Leuchtdioden fließt ein Strom von 60 mA über den Vorwiderstand 4, so daß der Spannungsabfall $U_R = 1{,}46$V ergibt. Somit beträgt $U_{IC} = 2{,}04$V und $P_{IC} = 122$ mW.

Sofern alle 3 Leuchtdioden 3 leuchten ergibt sich für $U_R = 2{,}2$ V, $U_{IC} = 1{,}3$ V. Und $P_{IC} = 117$ mW. In einem integrierten Schaltkreis mit beispielsweise einer zulässigen Verlustleistung von 250 mW sind z.B 6 Stromquellen vorhanden. Sofern jeweils drei dieser Stromquellen wie im vorliegenden Beispiel dargestellt mit einem gemeinsamen Vorwiderstand ausgestattet sind, ergibt sich bei einer Beschaltung mit 2 Vorwiderständen von jeweils 24,4 $\Omega$ eine maximale Verlustleistung von 2 x 122 mW =244 mW, so daß die zulässige Verlustleistung des integrierten Schaltkreises nicht überschritten wird. Auch der Widerstand 4 wird nicht überfordert: $P_R = U_R$ x 3 $I_{LED} = 2{,}2$ V x 90 mA= 198 mW.

Figur 2 zeigt einen Vorwiderstand 4 mit Anschlüssen 5,6, die auf Lötpads 7, 8 aufgelötet sind. Die Lötpads 7,8 gehen in Leitungsbahnen 9,10 über und sind auf einer Leiterplatte 11 angeordnet. Die Lötpads 7,8 sind derart ausgestaltet, daß sie größer sind als dies für die Lötverbindung zwischen den Anschlüssen 5,6 und den Leitungsbahnen 9,10 erforderlich wäre. Die freie Fläche dient als Kühlfläche. So kann der Vorwiderstand gekühlt werden, so daß er eine größere Verlustleistung abführen kann, als es seiner Nennverlustleistung entspricht. So können bei einer Vielzahl von Leuchtdioden unter Umständen einzelne Vorwiderstände eingespart werden, da zusätzlich Stromquellen über einen Vorwiderstand versorgt werden können.

## Patentansprüche

1. Ansteuerschaltung für eine Mehrzahl von Leuchtdioden (3), wobei der Strom ($I_{LED}$) durch jede der Leuchtdioden (3) durch jeweils eine Stromquelle (2) einstellbar ist, und wobei mehrere Stromquellen (2) in einem integrierten Schaltkreis (1) zusammengefaßt sind, dadurch gekennzeichnet, daß eine Mehrzahl von Stromquellen (2) einen gemeinsamen und Vorwiderstand (4) zur Senkung der Verlustleistung in den einzelnen Stromquellen (2) aufweist.

2. Ansteuerschaltung nach Anspruch 1, dadurch gekennzeichnet, daß für jeweils 2 Leuchtdioden (3) ein Vorwiderstand (4) vorgesehen ist.

3. Ansteuerschaltung nach Anspruch 1, dadurch gekennzeichnet, daß für jeweils 3 Leuchtdioden (3) ein Vorwiderstand (4) vorgesehen ist.

4. Ansteuerschaltung nach Anspruch 1, dadurch gekennzeichnet, daß die Vorwiderstände (4) mit Anschlüssen (5,6) auf Lötpads (7,8) gelötet sind, wobei die Lötpads (7,8) als Kühlfläche ausgestaltet sind.

5. Ansteuerschaltung nach Anspruch 4, dadurch gekennzeichnet, daß für jeweils 4 Leuchtdioden ein Vorwiderstand (4) vorgesehen ist.

$U_R$

$U_{LED}$

$U_{IC}$

$+ \bigcirc 5V$

4

$\downarrow I_{Led}$   $\downarrow I_{Led}$   $\downarrow I$

1

3

2

## Fig. 1

8  6  4  5  7

10

9

10

## Fig. 2

Europäisches
Patentamt

**EUROPÄISCHER RECHERCHENBERICHT**

Nummer der Anmeldung

EP 99 11 4383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 377 956 A (UNITED TECHNOLOGIES CORP) 18. Juli 1990 (1990-07-18) * Seite 2, Zeile 10-41 * * Seite 4, Zeile 14 - Seite 5, Zeile 46; Ansprüche 1-16; Abbildungen 4-7 * | 1-5 | H05B33/00 H05B33/08 G03G17/00 G02F1/136 |
| A | US 4 100 552 A (MUTO HAKARU ET AL) 11. Juli 1978 (1978-07-11) * Spalte 1, Zeile 7-40 * * Spalte 2, Zeile 26 - Spalte 4, Zeile 14; Ansprüche 1-16; Beispiele 1,2 * | 1-5 | |
| A | US 3 666 960 A (DAWSON ROBERT WILLIAM) 30. Mai 1972 (1972-05-30) * Spalte 1, Zeile 10-39 * * Spalte 2, Zeile 24 - Spalte 3, Zeile 34; Ansprüche 1-8; Abbildungen 1,4 * | 1-5 | |

| | |
|---|---|
| | RECHERCHIERTE SACHGEBIETE (Int.Cl.7) |
| | H05B G03G G02F |

Der vorliegende Recherchenbericht wurde für alle Patentansprüche erstellt

| Recherchenort | Abschlußdatum der Recherche | Prüfer |
|---|---|---|
| MÜNCHEN | 12. November 1999 | Pierron, P |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 4383

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-1999

| Im Recherchenbericht angeführtes Patentdokument | Datum der Veröffentlichung | Mitglied(er) der Patentfamilie | Datum der Veröffentlichung |
|---|---|---|---|
| EP 0377956 A | 18-07-1990 | US 4954752 A<br>DE 68915991 D<br>DE 68915991 T<br>JP 2922944 B<br>JP 3020778 A | 04-09-1990<br>14-07-1994<br>22-09-1994<br>26-07-1999<br>29-01-1991 |
| US 4100552 A | 11-07-1978 | JP 1324564 C<br>JP 52019923 A<br>JP 60035715 B | 27-06-1986<br>15-02-1977<br>16-08-1985 |
| US 3666960 A | 30-05-1972 | KEINE | |

Für nähere Einzelheiten zu diesem Anhang : siehe Amtsblatt des Europäischen Patentamts. Nr.12/82

6